# EUROPEAN PATENT SPECIFICATION

(11) **EP 2 815 911 B1**
(45) Date of publication and mention of the grant of the patent: **08.03.2017**
(21) Application number: 13172769.5
(22) Date of filing: 19.06.2013
(51) Int. Cl.: B60K 15/03, F17C 13/08

(54) **FUEL TANK FOR A VEHICLE PROVIDED WITH A PNEUMATIC SYSTEM**
KRAFTSTOFFTANK FÜR EIN FAHRZEUG MIT EINEM PNEUMATISCHEN SYSTEM
RÉSERVOIR DE CARBURANT POUR VÉHICULE POURVU D'UN SYSTÈME PNEUMATIQUE

(43) Date of publication of application: 24.12.2014
(73) Proprietor: IVECO MAGIRUS AG, 89079 Ulm (DE)
(72) Inventor: Leoka, Georg, 89075 Ulm (DE); Baur, Franz, 88480 Achstetten (DE)
(74) Representative: Franzolin, Luigi

(56) References cited:
- WO-A1-98/34808
- WO-A2-2011/130759
- DE-A1-102005 031 299
- DE-A1-102008 035 450

## Description

### Field of the invention

The present invention relates to a fuel tank for a vehicle provided with a pneumatic system.

### Description of the prior art

The heavy and commercial vehicles are often provided with a pneumatic implant comprising air tanks. For example, for commanding the brakes or the suspensions. Several strategies are known to fix the fuel tank and the compressed air tanks to the frame of the vehicles. Known procedures to fix the tanks to the frame involve time and money expeditures. DE102005031299 discloses a tank according to the preamble of claim 1.

### Summary of the invention

Therefore it is the main object of the present invention to provide a way to optimize the operation during the assembly of the heavy and commercial vehicles.

The main principle of the invention is to make the fuel tank and the air compressed tank integral between each other.

First of all, the assembly of just one component is faster and involves the use of a reduced numbers of brackets, screws and connecting means in general.

As clearly described in the following detailed description, the compressed air tanks usually have predetermined shapes, generally cylindrical shape in order to bear high air pressures, while this requirement is not needed for the fuel tanks, therefore, the fuel tank is build by incorporating one or more air tank along one or more of the external surfaces. The present invention relates also to an industrial vehicle provided with pneumatic brakes and/or pneumatic suspensions. These and further objects are achieved by means of an apparatus as described in the attached claims, which form an integral part of the present description.

### Brief description of the drawings

The invention will become fully clear from the following detailed description, given by way of a mere exemplifying and non limiting example, to be read with reference to the attached drawing figures, wherein:
- Fig. 1 shows a side view of a fuel/air tank according with an embodiment of the present invention;
- Fig. 2 shows a top view of the embodiment of figure 1,
- Figs. 3 and 4 show corresponding side and top view of another embodiment of the present invention.

The same reference numerals and letters in the figures designate the same or functionally equivalent parts.

### Detailed description of the preferred embodiments

According to the figures, it is clear that two compressed air tanks 3 are attached on both the opposite sides of a fuel tank 7 having substantially a right prism shape. It is not essential that exactly two compressed air tanks are attached to the fuel tank.

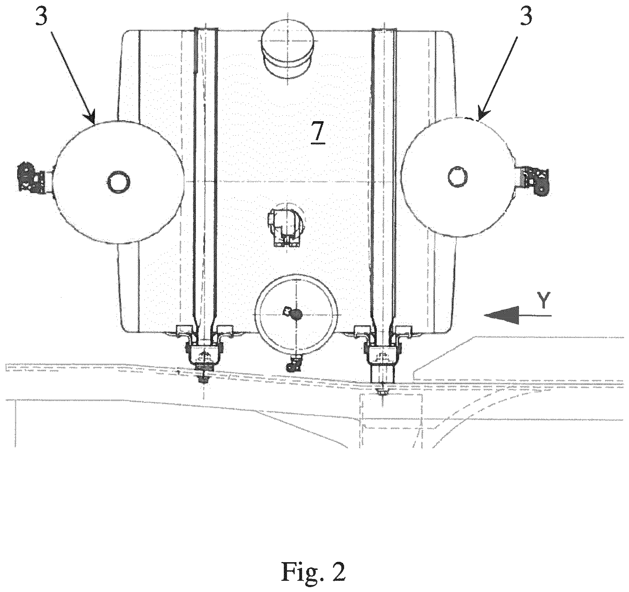

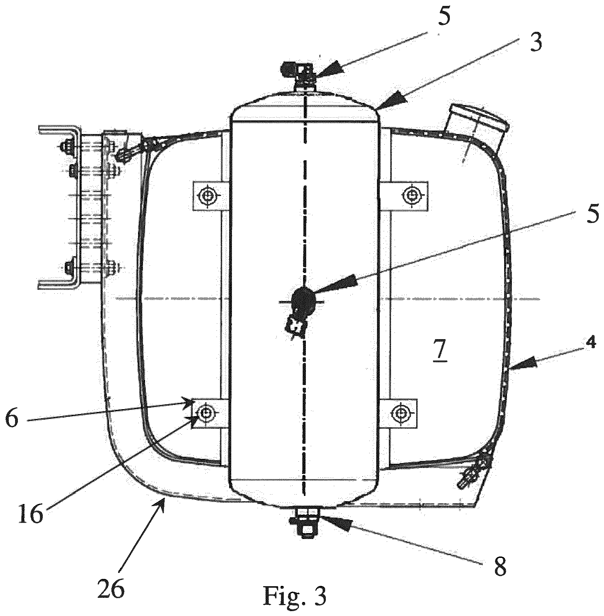

There is a clear interpenetration of the air tanks 3 in the fuel tank 7. In particular, a portion of the peripheral surfaces of the air tanks 3, as clearly shown on figures 2 and 3, defines a corresponding peripheral outer portion of the fuel tank 7 cover defining the fuel tank itself.

In other words the external surface of the air tank define the internal surface of the fuel tank.

The fuel tank 7 has substantially a right prism shape, however it can have different shapes.

The air tanks 3 have a substantially cylindrical shape and are disposed vertically, according to their respective development axis, on the opposite sides of the fuel tank, when the fuel tank is in operative conditions as shown in the figures.

According to figure 2, the air tanks are welded on the fuel tank along the intersection line of the interpenetration between the air tank and the fuel tank.

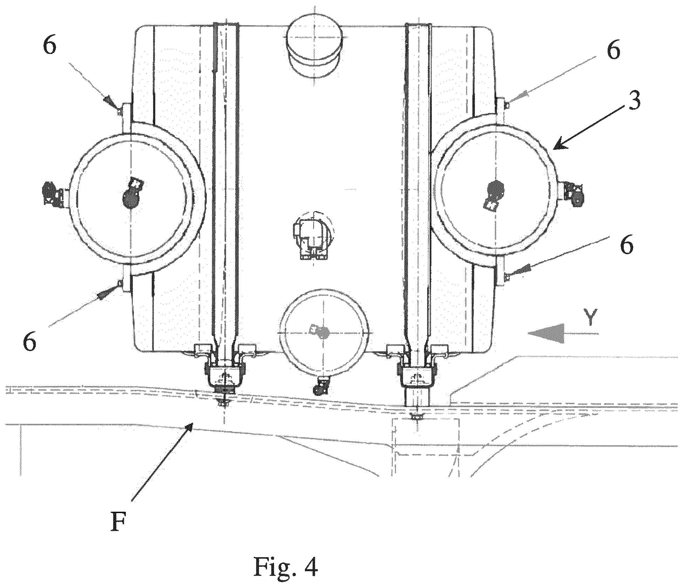

According to figures 3 and 4, the air tanks are attached on the fuel tank cover through the flanges 6. The flanges 6 can be simply flat plates welded on the external surface of the air tanks 3 and attached on the tank 7 by using of screws 16. As alternative, the flanges 6 can have a half-cylindrical shape with the opposite edges folded in order to be superimposed on the remaining/complementary portions of the external surfaces of the fuel tank 7.

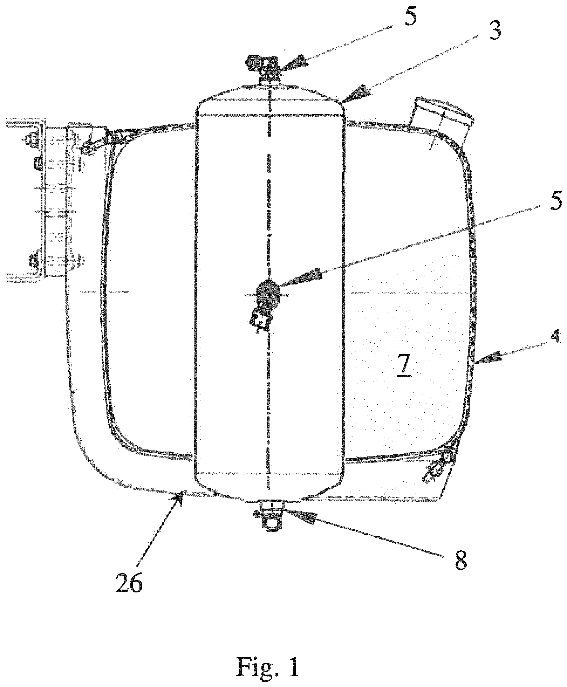

The upper and middle fitting 5 of the air tank, as shown on figure 1, are usually used for inflating and deflating the pressurized air in/from the air tank 7.

The lower dewatering valve 8 is usually used to tap the water accumulated within the air tank 3.

Only one couple of brackets 26 are necessary to fix the one-piece element comprising the fuel tank 7 and the at least one air tank 3 to the vehicle frame F. Therefore, time and money are saved during the vehicle assembly.

Preferably, the connection of the one-piece element to the bracket is carried out by means of specific belt, known per sè.

According with a preferred production method, also integral part of the present invention, the fuel tank cover is obtained by moulding of a sheet metal and by folding and welding of the edges of the moulded sheet metal. Then, the air tanks are attached on the fuel tank obtained.

The preferred embodiment of fuel tank incorporating two compressed air tanks, as shown on the attached figures, finds the best implementation in those industrial vehicles provided both of pneumatic brakes and pneumatic suspensions. In such a case, for example, one of the compressed air tanks in connected to the pneumatic brake system, and the other with the pneumatic suspension system.

This does not mean that a vehicle provided with a fuel tank incorporating two compressed air tanks, as shown on the attached figure, must be provided of both the pneumatic systems, but of at least of one pneumatic system.

By means of the present invention, a number of advantages are achieved.

In particular, not only a strong reduction of costs can be achieved, but also a clear improvement of the safety, due to the reduction numbers of operation needed to attach the only one-piece element to the vehicle.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the scope of the invention, as claimed in the claims, are deemed to be covered by this invention.

Further implementation details will not be described, as the man skilled in the art is able to carry out the invention starting from the teaching of the above description.

## Claims

1. Fuel tank for a vehicle provided with a pneumatic system comprising at least one compressed air tank (3) attached to the fuel tank (7) itself and
having an interpenetration of the at least one air tank (3) in the fuel tank (7) itself, **characterized in that**
a portion of a peripheral surface of the at least one air tank (3) defines a correspondeing peripheral outer portion of the fuel tank (7) cover defining the fuel tank itself and wherein the air tank is attached on the fuel tank cover through flanges (6).

2. The fuel tank according to claim 1,
wherein two compressed air tanks (3) are attached on both the opposite sides of a fuel tank (7) having a substantially right prism shape.

3. The fuel tank according to claim 2, wherein the air tanks (3) have a cylindrical shape defining a development axis and wherein the tanks are vertically disposed when the fuel tank is in operative conditions.
cover through flanges (6).

4. The fuel tank according to claim 1, wherein the flanges (6) comprise flat plates welded on the external surface of the air tanks (3) and attached on the fuel tank (7) by means of screws (16).

5. The fuel tank according to claim 1, wherein the flanges (6) comprise a half-cylindrical shape with the opposite edges folded in order to be superimposed on the remaining/complementary portions of the external cover of the fuel tank (7).

6. Industrial or commercial vehicle comprising a fuel tank and a pneumatic system, wherein the fuel tank (7) is according to one of the previous claims.

7. Industrial or commercial vehicle according to claim 6, wherein said fuel tank (7) is fixed to the vehicle through a couple of brackets (26).

8. Industrial or commercial vehicle according to claim 6, wherein said at least one compressed air tank (3) attached to the fuel tank (7), is connected with a pneumatic system of the industrial vehicle.

9. Industrial or commercial vehicle according to claim 8, wherein said pneumatic system comprises a pneumatic braking system and/or a pneumatic suspension system.

10. Industrial or commercial vehicle according to claim 9, wherein said fuel tank (7) has a first and a second compressed air tanks (3), and wherein said first compressed air tank (3) is connected to the pneumatic braking system and said second compressed air tank (3) is connected to the pneumatic suspension system.

## Patentansprüche

1. Kraftstofftank für ein Fahrzeug, ausgestattet mit einem pneumatischen System, umfassend mindestens einen Drucklufttank (3), angebracht an dem Kraftstofftank (7) selbst, welcher Kraftstofftank (7) selbst eine Durchdringung des mindestens einen Lufttanks (3) aufweist, **dadurch gekennzeichnet, dass**
- ein Teil der Umfangsoberfläche des mindestens einen der Lufttanks (3) einen entsprechenden äußeren Umfangsteil der Kraftstofftankhülle (7) bildet, welche den Kraftstofftank selbst begrenzt und wobei der Lufttank an den Kraftstofftank über Flansche (6) angebracht ist.

2. Kraftstofftank gemäß Anspruch 1, wobei zwei Drucklufttanks (3) an dem Kraftstofftank (7) an jeweils gegenüberliegenden Seiten angebracht sind und welche im Wesentlichen die Form eines geraden Prismas haben.

3. Kraftstofftank gemäß Anspruch 2, wobei die Lufttanks (3) eine zylindrische Form haben, die eine Ausbildungsachse definieren und wobei die Tanks vertikal angeordnet sind, wenn der Kraftstofftank in seiner Betriebsposition ist.

4. Kraftstofftank gemäß Anspruch 1, wobei die Flansche (6) flache Platten umfassen, die an die äußere Oberfläche der Lufttanks (3) geschweißt sind und an den Kraftstofftank (7) mittels Schrauben (16) angebracht sind.

5. Kraftstofftank gemäß Anspruch 1, wobei die Flansche (6) eine halbzylindrische Form besitzen mit gegenüberliegenden Rändern, so gefaltet, dass sie auf den verbleibenden/komplementären Bereichen der äußeren Hülle des Kraftstofftanks (7) aufliegen.

6. Industrielles oder gewerbliches Fahrzeug, umfassend einen Kraftstofftank und ein pneumatisches System, wobei der Kraftstofftank (7) gemäß einem der vorgehenden Ansprüche ist.

7. Industrielles oder gewerbliches Fahrzeug gemäß Anspruch 6, wobei der Kraftstofftank (7) an dem Fahrzeug durch ein Paar Klammern (26) befestigt ist.

8. Industrielles oder gewerbliches Fahrzeug gemäß Anspruch 6, wobei der wenigstens eine Drucklufttank (3) an dem Kraftstofftank an ein pneumatisches System des Fahrzeugs angeschlossen ist.

9. Industrielles oder gewerbliches Fahrzeug gemäß Anspruch 8, wobei das pneumatische System ein pneumatisches Bremssystem und/oder ein pneumatisches Federungssystem umfasst.

10. Industrielles oder gewerbliches Fahrzeug gemäß Anspruch 9, wobei der Kraftstofftank (7) einen ersten und einen zweiten Drucklufttank (3) besitzt, und wobei der erste Drucklufttank (3) mit dem pneumatischen Bremssystem und der zweite Drucklufttank (3) mit dem pneumatischen Federungssystem verbunden ist.

## Revendications

1. Réservoir de carburant pour un véhicule pourvu d'un système pneumatique comprenant au moins un réservoir d'air comprimé (3) fixé sur le réservoir de carburant (7) lui-même et ayant une interpénétration du au moins un réservoir d'air (3) dans le réservoir de carburant (7) lui-même, **caractérisé en ce que**
une partie d'une surface périphérique du au moins un réservoir d'air (3) définit une partie externe périphérique correspondante du couvercle de réservoir de carburant (7) définissant le réservoir de carburant lui-même et dans lequel le réservoir d'air est fixé sur le couvercle de réservoir de carburant par le biais de brides (6).

2. Réservoir de carburant selon la revendication 1,
dans lequel deux réservoirs d'air comprimé (3) sont fixés sur les deux côtés opposés d'un réservoir de carburant (7) ayant une forme de prisme sensiblement droit.

3. Réservoir de carburant selon la revendication 2, dans lequel les réservoirs d'air (3) ont une forme cylindrique définissant un axe de développement et dans lequel les réservoirs sont disposés verticalement lorsque le réservoir de carburant est dans des conditions opérationnelles.

4. Réservoir de carburant selon la revendication 1, dans lequel les brides (6) comprennent des plaques plates soudées sur la surface externe des réservoirs d'air (3) et fixées sur le réservoir de carburant (7) au moyen de vis (16).

5. Réservoir de carburant selon la revendication 1, dans lequel les brides (6) comprennent une forme semi-cylindrique avec les bords opposés pliés afin d'être superposés sur les parties restantes/complémentaires du couvercle externe du réservoir de carburant (7).

6. Véhicule industriel ou utilitaire comprenant un réservoir de carburant et un système pneumatique, dans lequel le réservoir de carburant (7) est selon l'une des revendications précédentes.

7. Véhicule industriel ou utilitaire selon la revendication 6, dans lequel ledit réservoir de carburant (7) est fixé au véhicule par une paire de supports (26).

8. Véhicule industriel ou utilitaire selon la revendication 6, dans lequel ledit au moins un réservoir d'air comprimé (3) fixé sur le réservoir de carburant (7), est raccordé avec un système pneumatique du véhicule industriel.

9. Véhicule industriel ou utilitaire selon la revendication 8, dans lequel ledit système pneumatique comprend un système de frein pneumatique et/ou un système de suspension pneumatique.

10. Véhicule industriel ou utilitaire selon la revendication 9, dans lequel ledit réservoir de carburant (7) a un premier et un second réservoirs d'air comprimé (3), et dans lequel ledit premier réservoir d'air comprimé (3) est raccordé au système de freinage pneumatique et ledit second réservoir d'air comprimé (3) est raccordé au système de suspension pneumatique.
